(19) Europäisches Patentamt
European Patent Office
Office européen des brevets

(11) **EP 4 310 956 A1**

(12) **EUROPEAN PATENT APPLICATION**
published in accordance with Art. 153(4) EPC

(43) Date of publication:
**24.01.2024 Bulletin 2024/04**

(21) Application number: **23774304.2**

(22) Date of filing: **13.02.2023**

(51) International Patent Classification (IPC):
*H01M 4/587* (2010.01)     *C01B 32/05* (2017.01)
*C01B 32/21* (2017.01)     *H01M 4/36* (2006.01)

(52) Cooperative Patent Classification (CPC):
**C01B 32/05; C01B 32/21; H01M 4/36; H01M 4/587**

(86) International application number:
**PCT/JP2023/004868**

(87) International publication number:
**WO 2023/181705 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2022 JP 2022048746**

(71) Applicant: **Mitsubishi Chemical Corporation
Chiyoda-ku
Tokyo 100-8251 (JP)**

(72) Inventors:
• **ISHIWATARI, Nobuyuki
Tokyo 100-8251 (JP)**
• **KONDO, Hisako
Tokyo 100-8251 (JP)**
• **YOKOMIZO, Masakazu
Tokyo 100-8251 (JP)**

(74) Representative: **Vossius & Partner
Patentanwälte Rechtsanwälte mbB
Siebertstrasse 3
81675 München (DE)**

(54) **CARBON MATERIAL COMPOSITION, METHOD FOR PRODUCING CARBON MATERIAL COMPOSITION, NEGATIVE ELECTRODE, AND SECONDARY BATTERY**

(57)     The present invention provides a carbon material composition containing a carbon material (A) and a carbon material (B), in which the carbon material (A) contains graphite containing an amorphous carbonaceous material or a graphite material, has two or more peaks in a pore size distribution measured by a mercury porosimetry, and satisfies $y \leq -0.0084x + 0.13$ wherein a cumulative pore volume in a range where a pore diameter is equal to or smaller than a pore diameter at a local minimum value between a peak of a smallest pore diameter and a peak of a second smallest pore diameter in the pore size distribution is defined as y (mL/g) and a coating rate of the amorphous carbonaceous material or the graphite material in the graphite is defined as x (%), and the carbon material (B) has a pellet density of 1.80 g/cm$^3$ or more.

EP 4 310 956 A1

**Description**

TECHNICAL FIELD

The present invention relates to a carbon material composition, a method for producing a carbon material composition, a negative electrode, and a secondary battery.

BACKGROUND ART

In recent years, with the miniaturization of electronic devices, a demand for a high-capacity secondary battery has increased. In particular, the secondary battery, particularly a lithium-ion secondary battery, has attracted attention because of a higher energy density and more excellent charge and discharge characteristics than a nickelcadmium battery or a nickel-hydrogen battery. As a lithium-ion secondary battery, a non-aqueous lithium secondary battery including a positive electrode and a negative electrode capable of occluding and releasing lithium ions and a non-aqueous electrolytic solution in which a lithium salt such as $LiPF_6$ or $LiBF_4$ is dissolved has been developed and put into practical use.

In the related art, enhancement of the performance of the lithium-ion secondary battery has been widely studied, but in recent years, further enhancement of the performance of the lithium-ion secondary battery has been demanded. For example, Patent Literature 1 discloses a negative electrode material in which a pore volume in particles per coating rate or a peak value of voids in particles is controlled.

CITATION LIST

PATENT LITERATURE

Patent Literature 1: JP2021-158043A

SUMMARY OF INVENTION

TECHNICAL PROBLEM

However, the negative electrode material disclosed in Patent Literature 1 has a problem that when it is used at a high density, it is destroyed during pressing, resulting in a decrease in initial efficiency of the secondary battery. In addition, commonly used negative electrode materials still have a problem of expansion of an electrode plate.

The present invention has been made in view of such problems, and an object of the present invention is to provide a carbon material composition that is not destroyed during pressing even in use at a high density, can maintain high initial efficiency of a secondary battery, and can reduce expansion of an electrode plate to a low level. Another object of the present invention is to provide a method for producing a carbon material composition for obtaining the above carbon material composition.

SOLUTION TO PROBLEM

Although various types of negative electrode materials have been studied in the past, a negative electrode material which can maintain high initial efficiency of the secondary battery and can reduce the expansion of the electrode plate to a low level has not been found. As a result of intensive studies to solve the above problems, the inventors of the present invention have found that by containing two types of carbon materials to be described later, high initial efficiency of the secondary battery can be maintained, and the expansion of the electrode plate can be reduced to a low level. Thus, the present invention has been accomplished.

That is, the gist of the present invention is as follows.

[1] A carbon material composition containing a carbon material (A) and a carbon material (B),

in which the carbon material (A) contains graphite containing an amorphous carbonaceous material or a graphite material;
has two or more peaks in a pore size distribution measured by a mercury perimetry; and
satisfies a following formula (1):

$$y \leq -0.0084x + 0.13 \quad (1)$$

wherein a cumulative pore volume in a range where a pore diameter is equal to or smaller than a pore diameter at a local minimum value in the pore size distribution is defined as y (mL/g), the local minimum value is taken between a peak of a smallest pore diameter and a peak of a second smallest pore diameter in the pore size distribution, and a coating rate of the amorphous carbonaceous material or the graphite material in the graphite is defined as x (%), and
the carbon material (B) has a pellet density of 1.80 g/cm$^3$ or more.

[2] The carbon material composition according to [1], in which the carbon material (A) further satisfies the following formula (2):

$$y \geq 0.005 \quad (2).$$

[3] The carbon material composition according to [1] or [2], in which a pore diameter at a peak top of the peak of the smallest pore diameter is 500 nm or less.

[4] The carbon material composition according to any one of [1] to [3], in which x in formula (1) is 0.1 to 15.

[5] The carbon material composition according to any one of [1] to [4], in which the carbon material (A) has a tap density of 1.15 g/cm$^3$ or more.

[6] The carbon material composition according to any one of [1] to [5], in which the carbon material (A) has a specific surface area of 3.0 m$^2$/g or less.

[7] The carbon material composition according to any one of [1] to [6], in which the carbon material (B) is spheroidized graphite.

[8] The carbon material composition according to any one of [1] to [7], in which the carbon material (B) has a specific surface area of 3.0 m$^2$/g or more.

[9] The carbon material composition according to any one of [1] to [8], in which with respect to 100 mass% of the carbon material composition, a content of the carbon material (A) is 40 mass% to 90 mass%, and a content of the carbon material (B) is 10 mass% to 60 mass%.

[10] A method for producing a carbon material composition including

a step of mixing a carbon material (A) with a carbon material (B),
in which the carbon material (A) contains graphite containing an amorphous carbonaceous material or a graphite material;
has two or more peaks in a pore size distribution measured by a mercury porosimetry; and
satisfies a following formula (1):

$$y \leq -0.0084x + 0.13 \quad (1)$$

wherein a cumulative pore volume in a range where a pore diameter is equal to or smaller than a pore diameter at a local minimum value in the pore size distribution is defined as y (mL/g), the local minimum value is taken between a peak of a smallest pore diameter and a peak of a second smallest pore diameter in the pore size distribution, and a coating rate of the amorphous carbonaceous material or the graphite material in the graphite is defined as x (%), and
the carbon material (B) has a pellet density of 1.80 g/cm$^3$ or more.

[11] A negative electrode including

a current collector; and
an active material layer formed on the current collector,
in which the active material layer contains the carbon material composition according to any one of [1] to [9].

[12] A secondary battery including

a positive electrode;
a negative electrode; and

an electrolyte,
in which the negative electrode is the negative electrode according to [11].

EFFECTS OF INVENTION

In use as an active material for a negative electrode of a secondary battery, the carbon material composition according to the present invention is not destroyed during pressing even in use at a high density, can maintain high initial efficiency of a secondary battery, and can reduce expansion of an electrode plate to a low level. In addition, the method for producing a carbon material composition according to the present invention can provide the above carbon material composition.

DESCRIPTION OF EMBODIMENTS

Although the present invention will be described in detail below, the present invention is not limited to the following embodiments, and can be implemented with various modifications within the scope of the gist thereof. When the expression "to" is used in the present description, it is used as an expression including numerical values or physical property values before and after it.

(Carbon Material Composition)

A carbon material composition according to the present embodiment contains a carbon material (A) and a carbon material (B). The carbon material (A) contains graphite containing an amorphous carbonaceous material or a graphite material, has two or more peaks in a pore size distribution measured by a mercury porosimetry, and satisfies the following formula (1):

$$y \leq -0.0084x + 0.13 \quad (1)$$

wherein a cumulative pore volume in a range where a pore diameter is equal to or smaller than a pore diameter at a local minimum value in the above pore size distribution is defined as y (mL/g), the local minimum value is taken between a peak of a smallest pore diameter and a peak of a second smallest pore diameter in the pore size distribution, and a coating rate of the amorphous carbonaceous material or the graphite material in the graphite is defined as x (%). In addition, the carbon material (B) has a pellet density of 1.80 $g/cm^3$ or more.

Since the carbon material (B) is selectively deformed to have a higher density than the carbon material (A), when the carbon material composition contains the carbon material (B), destruction of the carbon material (A) can be prevented, and the performance of the carbon material (A), which has high initial efficiency and low expansion can be utilized. Therefore, when the carbon material composition according to the present embodiment contains both of the above carbon material (A) and the above carbon material (B), it is not destroyed during pressing even in use at a high density, and high initial efficiency of a secondary battery can be maintained, and expansion of an electrode plate can be reduced to a low level.

(Carbon Material (A))

The carbon material (A) contains graphite containing an amorphous carbonaceous material or a graphite material, has two or more peaks in a pore size distribution measured by a mercury porosimetry, and satisfies the following formula (1):

$$y \leq -0.0084x + 0.13 \quad (1)$$

wherein a cumulative pore volume in a range where a pore diameter is equal to or smaller than a pore diameter at a local minimum value in the above pore size distribution is defined as y (mL/g), the local minimum value is taken between a peak of a smallest pore diameter and a peak of a second smallest pore diameter in the pore size distribution, and a coating rate of the amorphous carbonaceous material or the graphite material in the graphite is defined as x (%).

When the carbon material composition according to the present embodiment contains the above carbon material (A), high initial efficiency of the secondary battery can be maintained and the expansion of the electrode plate can be reduced to a low level for the following reasons.

In the pore volume measured by a mercury porosimetry, the cumulative pore volume in the range where the pore diameter is equal to or smaller than the pore diameter at the local minimum value taken between the peak of the smallest pore diameter and the peak of the second smallest pore diameter is an index of the pore volume present inside the carbon material (A). By reducing this to a specific range with respect to the coating rate of the amorphous carbonaceous material or the graphite material in the graphite, the amount of voids in particles is reduced. When the amount of the voids in the particles is reduced, the particles are denser and can be pressed in a state with less deformation of the particles compared to particles having many voids in particles such as natural graphite in the related art.

The carbon material (A) has two or more peaks, preferably two peaks, in the pore size distribution measured by a mercury porosimetry. The peak in the pore size distribution indicates voids between particles and voids within particles. When there is one peak in the pore size distribution, it means that only voids between particles are present. When peaks in the pore size distribution are two or more peaks, it means that not only voids between particles but also voids within particles are present, which has an advantage that particles themselves have room to deform compared to particles with no void at all.

The carbon material (A) satisfies the following formula (1):

$$y \le -0.0084x + 0.13 \quad (1)$$

wherein a cumulative pore volume in a range where a pore diameter is equal to or smaller than a pore diameter at a local minimum value in the pore size distribution is defined as y (mL/g), the local minimum value is taken between a peak of a smallest pore diameter and a peak of a second smallest pore diameter in the pore size distribution, and a coating rate of the amorphous carbonaceous material or the graphite material in the graphite is defined as x (%).

When the carbon material (A) satisfies formula (1), graphite pores can be suitably coated with the amorphous carbonaceous material or the graphite material, that is, coated with a small amount of amorphous carbonaceous material or graphite material, so that the hardness of the particles of the carbon material (A) can be moderated.

When the formula (1) is expressed as $y \le \alpha x + \beta$, the coating rate x is set on the x axis, and the cumulative pore volume y is set on the y axis, $\alpha$ represents a slope of formula (1) and $\beta$ represents a y-intercept of formula (1).

$\alpha$ is -0.0084 based on a relationship between the coating rate of the amorphous carbonaceous material or the graphite material in the graphite and efficiency of filling voids in graphite particles.

$\beta$ is 0.13 since it is the void in the graphite particles before coating. When the value of $\beta$ in formula (1) is 0.13 to 0.11, the formula (1) is preferably satisfied, even when it is 0.09, formula (1) is more preferably satisfied, and when it is 0.07, formula (1) is still more preferably satisfied.

It is preferable that the carbon material (A) further satisfies the following formula (2) since voids in the particles must be present at a minimum or more.

$$y \ge 0.005 \quad (2)$$

When the formula (2) is expressed as $y \ge \gamma$, $\gamma$ is preferably 0.005 since the particles themselves have room to deform. Even when the value of y in formula (2) is 0.005 to 0.010, formula (2) is more preferably satisfied, and when it is 0.015, the formula (2) is still more preferably satisfied.

The carbon material (A) preferably satisfies formula (2) in addition to formula (1). At this time, the value of $\beta$ on the right side of the formula (1) is more preferably 0.11, more preferably 0.09, and still more preferably 0.07 instead of 0.13, and the value of $\gamma$ on the right side of formula (2) is more preferably 0.010, and still more preferably 0.015 instead of 0.005.

The pore diameter at a peak top of the peak of a smallest pore diameter in the carbon material (A) is preferably 500 nm or less, more preferably 400 nm or less, and still more preferably 300 nm or less since the pores in the particles are small, flakes in the particles are denser and the expansion of the electrode plate can be reduced. The lower limit of the pore diameter is not particularly limited, and is generally 5 nm or more.

The cumulative pore volume y (mL/g) of the carbon material (A) is preferably from 0.002 to 0.120, more preferably from 0.003 to 0.090, still more preferably from 0.005 to 0.070, and particularly preferably from 0.010 to 0.050. Here, it is preferably 0.002 or more, more preferably 0.003 or more, still more preferably 0.005 or more, particularly preferably 0.010 or more, and is preferably 0.120 or less, more preferably 0.090 or less, still more preferably 0.070 or less, particularly preferably 0.050 or less since lithium ions can move smoothly in an electrode during charge and discharge, and the rapid charge and discharge characteristics and the low temperature input and output characteristics are excellent.

In the present description, the pore size distribution is measured by a mercury porosimetry.

Specifically, a sample weighed to a value of about 0.2 g is enclosed in a powder cell, and pretreated by deaeration at 25°C and 50 $\mu$mHg or less for 10 minutes using a mercury porosimeter. Next, the pressure is reduced to 4 psia to introduce mercury into the above cell and the pressure is increased stepwise from 4 psia to 40,000 psia and then reduced to 25 psia. The number of steps during pressure increase is set to 80 or more, and the amount of mercury intrusion is measured after an equilibrium time of 10 seconds at each step. The pore size distribution is calculated based on a mercury intrusion curve thus obtained using the Washbum equation. A surface tension (γ) of mercury is calculated as 485 dyne/cm and the contact angle (ψ) as 140°. Based on the obtained results, a graph is created in which a horizontal axis shows the pore diameter and a vertical axis shows the pore volume. From this graph, peaks are confirmed, a local minimum value between a peak of a smallest pore diameter and a peak of a second smallest pore diameter (between two peaks on the smaller pore diameter side) is confirmed, and a cumulative pore volume in a range where a pore diameter is equal to or smaller than a pore diameter at this local minimum value is taken as the cumulative pore volume (mL/g). The peak indicates an apex of a waveform, and the height thereof (difference in cumulative pore volume between the apex and the local minimum values on both sides thereof) is 0.002 mL/g or more.

The coating rate x (%) of the carbon material (A) is preferably from 0.1 to 15, more preferably from 1 to 12, still more preferably from 2 to 10, and even more preferably from 3 to 8. Here, the coating rate x (%) is preferably 0.1 or more, more preferably 1 or more, still more preferably 2 or more, and particularly preferably 3 or more since lithium ions move smoothly from graphite, and the rapid charge and discharge characteristics and the low temperature input and output characteristics are excellent. In addition, the coating rate x (%) is preferably 15 or less, more preferably 12 or less, still more preferably 10 or less, and particularly preferably 8 or less since the proportion of graphite is sufficient and the capacity can be easily increased.

In the present description, the coating rate x (%) is calculated according to the following formula (3). That is, it is calculated based on a mixing ratio of the graphite and the amorphous carbonaceous material or the graphite material, and a firing yield after firing.

$$\text{Coating rate x (\%)} = ([\text{mass of sample after firing - mass of graphite}]/[\text{mass of sample after firing}]) \times 100 \quad (3)$$

When the above mixing ratio and the above firing yield are unknown, the coating rate x (%) is estimated using a difference in true density between the graphite and the amorphous carbonaceous material or the graphite material.

Specifically, the crystallinity of the graphite in a carbon material is confirmed by a d002 value, and for a high crystallinity with a d002 value of 3.357 Å or less, the coating rate x (%) is estimated using the following formula (4).

$$\text{Coating rate x (\%)} = 596.72 - 264.02 \times \text{true density} \quad (4)$$

The theoretical d002 value of the graphite is 3.354 Å, and natural graphite having high crystallinity exhibits a d002 value close to the theoretical value. On the other hand, the d002 value of artificial graphite varies greatly depending on the type of raw material coke and a graphitization temperature.

The carbon material (A) has a d002 value of preferably 3.357 Å or less, more preferably 3.356 Å or less, and still more preferably 3.354 Å since the graphite is highly crystalline and has a sufficient charge and discharge capacity.

The carbon material (A) has Lc of preferably 900 Å or more, and more preferably 1000 Å or more since the graphite is highly crystalline and has a sufficient charge and discharge capacity. The upper limit value of the Lc is not particularly limited, and is generally 1000 Å as the upper limit of measurement accuracy.

In the present description, the d002 value is a value of a lattice plane (002 plane) measured by an X-ray diffraction method according to the Gakushin method (method of Japan Society for the Promotion of Science), and the Lc is a value of the crystallite size measured by the X-ray diffraction method according to the Gakushin method. The measurement conditions for X-ray diffraction are as follows.

Sample: one obtained by adding about 15 mass% per the total amount of an X-ray standard high-purity silicon powder to a measurement object and performing mixing
X-ray: CuKα ray
Measurement range: 20° ≤ 2θ ≤ 30°
Step angle: 0.013°
Sample adjustment: a sample plate wherein a concave part having a depth of 0.2 mm is filled with a powder sample to prepare a flat sample surface

In the present description, the true density is a value measured by a liquid phase substitution method (pycnometer method) using butanol. The true density is measured five times, and the average value is used.

The carbon material (A) has a true density of preferably 2.200 g/cm³ or more, more preferably 2.210 g/cm³ or more, and still more preferably 2.220 g/cm³ or more, since the filling property and the capacity are excellent. The theoretical true density of the graphite is 2.262 g/cm$^3$.

(Physical Properties of Carbon Material (A))

The carbon material (A) has a volume-based average particle diameter (d50) of preferably from 1 to 50 $\mu$m, more preferably from 3 to 30 $\mu$m, and still more preferably from 5 to 20 $\mu$m. Here, the volume-based average particle diameter of the carbon material (A) is preferably 1 $\mu$m or more, more preferably 3 $\mu$m or more, and still more preferably 5 $\mu$m or more, since an irreversible capacity increase and a loss of an initial battery capacity are prevented. In addition, the volume-based average particle diameter of the carbon material (A) is preferably 50 $\mu$m or less, more preferably 30 $\mu$m or less, and still more preferably 20 $\mu$m or less since step defects such as streaking during electrode plate preparation can be prevented, and the rapid charge and discharge characteristics and the low temperature input and output characteristics are excellent.

In the present description, the volume-based average particle diameter (d50) is a value of a volume-based median diameter measured with a laser diffraction/scattering type particle size distribution measuring device.

Specifically, in 10 mL of a 0.2 mass% aqueous solution of polyoxyethylene sorbitan monolaurate as a surfactant, 0.01 g of a sample is suspended, the mixture is introduced into a laser diffraction/scattering type particle size distribution measuring device, and is irradiated with 28 kHz ultrasonic waves at an output of 60 W for 1 minute, and then the volume-based median diameter is measured by the above measuring device.

The carbon material (A) has a specific surface area (SA) of preferably from 0.5 to 10.0 m$^2$/g, more preferably from 0.8 to 6.5 m$^2$/g, still more preferably from 1.0 to 5.0 m$^2$/g, and even more preferably from 1.0 to 3.0 m$^2$/g. Here, the specific surface area of the carbon material (A) is preferably 0.5 m$^2$/g or more, more preferably 0.8 m$^2$/g or more, and still more preferably 1.0 m$^2$/g or more, since a part where lithium ions go in and out is ensured, and the rapid charge and discharge characteristics and the low temperature input and output characteristics are excellent. In addition, the specific surface area of the carbon material (A) is preferably 10.0 m$^2$/g or less, more preferably 6.5 m$^2$/g or less, still more preferably 5.0 m$^2$/g or less, even more preferably 3.0 m$^2$/g or less, and even still more preferably 2.0 m$^2$/g or less, since side reactions with an electrolytic solution are prevented, a decrease in initial charge and discharge efficiency and an increase in gas generation amount are prevented, and the battery capacity is improved.

In the present description, the specific surface area (SA) is a value measured by the BET (Brunauer-Emmett-Teller) method.

Specifically, a sample is preliminarily dried under a reduced pressure at 350°C under a nitrogen flow for 15 minutes, and then cooled to the temperature of liquid nitrogen, and the specific surface area is measured using a specific surface area measuring device by a nitrogen adsorption BET one-point method by a gas flow method using a nitrogen-helium mixed gas accurately adjusted such that the value of the relative pressure of nitrogen to the atmospheric pressure is 0.3.

The carbon material (A) has a tap density of preferably from 1.15 to 1.40 g/cm$^3$, more preferably from 1.17 to 1.35 g/cm$^3$, and still more preferably from 1.20 to 1.30 g/cm$^3$. Here, the tap density of the carbon material (A) is preferably 1.15 g/cm$^3$ or more, more preferably 1.17 g/cm$^3$ or more, and still more preferably 1.20 g/cm$^3$ or more since step defects such as streaking during electrode plate preparation can be prevented, the rollability is good and it is easy to form a high-density negative electrode sheet due to the increase in filling property, the curvature of a movement path of lithium ions is reduced when it is made into an electrode body, the movement of the electrolytic solution is smooth due to an adjusted shape of the voids between the particles, and the rapid charge and discharge characteristics are improved. In addition, the tap density of the carbon material (A) is preferably 1.40 g/cm$^3$ or less, more preferably 1.35 g/cm$^3$ or less, and still more preferably 1.30 g/cm$^3$ or less since the particles do not become too hard and have excellent electrode pressability due to an appropriate amount of space on the surface and inside the particles, and the rapid charge and discharge characteristics and the low temperature input and output characteristics are excellent.

In the present description, the tap density is a value of density calculated based on the volume and the mass of the sample when, using a powder density meter, the sample is dropped through a sieve having an opening of 300 $\mu$m into a cylindrical tap cell having a diameter of 1.6 cm and a volume capacity of 20 cm$^3$, the cell is completely filled, and then tapping is performed at a stroke length of 10 mm 1000 times.

The carbon material (A) has a numerical value obtained by subtracting the tap density from the pellet density of preferably from 0.10 g/cm$^3$ to 0.80 g/cm$^3$, more preferably from 0.15 g/cm$^3$ to 0.60 g/cm$^3$, and still more preferably from 0.20 g/cm$^3$ to 0.40 g/cm$^3$. Here, the above difference is preferably 0.10 g/cm$^3$ or more, more preferably 0.15 g/cm$^3$ or more, and still more preferably 0.20 g/cm$^3$ or more since the particles can be pressed to a high density without being too hard. In addition, the above difference is preferably 0.80 g/cm$^3$ or less, more preferably 0.60 g/cm$^3$ or less, and still more preferably 0.40 g/cm$^3$ or less since the particles have moderate hardness, and even when pressed at a high density, the particles on the surface of the electrode are not crushed too much, and the movement of the electrolytic solution is smooth.

In the present description, the numerical value obtained by subtracting the tap density from the pellet density is calculated according to the following formula (5). The numerical value obtained by subtracting the tap density from the pellet density represents the ease of clogging when a load is applied, and can be used as an index of the hardness of particles.

$$\text{Numerical value obtained by subtracting tap density from pellet density (g/cm}^3) = \text{pellet density - tap density}$$

(5)

In the present description, the pellet density is a value measured by the following method.

Two types of jigs are inserted into a mold having an inner diameter of 10 mm: a shaft having a diameter of 10 mm and a length of 35 mm as a pressing jig, and a shaft having a diameter of 10 mm and a length of 6 mm as a receiving jig, then a device capable of measuring the load and height during clamping is set, a load of 15 kgf is applied with a hydraulic pump, and the height of the jig is measured. Thereafter, only the pressing jig is taken out, 0.6 g of a carbon material is added, and the pressing jig is inserted again. After setting the mold on a hydraulic jack and closing a pressure valve, the pressure is gently increased to 0.9 t/cm$^2$, rapidly increased to 2.4 t/cm$^2$, and then held for 3 seconds. The hydraulic jack is released from the hand, followed by waiting for 60 seconds, the pressure valve is loosened to reduce the pressure. Thereafter, the device capable of measuring the load and height during clamping is again set, a load of 15 kgf is applied with the hydraulic pump, and the height of the jig after pressurization is measured. At the same time, the mass of the carbon material after pressurization is measured, and the density calculated based on the difference in height of the jig and the mass is defined as the pellet density. The load per unit area is calculated based on the scale of the hydraulic jack, the cylinder diameter of the hydraulic jack, and the inner diameter of the mold.

The carbon material (A) has a pellet density of preferably from 1.30 to 1.79 g/cm$^3$, and more preferably from 1.40 to 1.70 g/cm$^3$. Here, the above pellet density is preferably 1.30 g/cm$^3$ or more, and more preferably 1.40 g/cm$^3$ or more, and is preferably 1.79 g/cm$^3$ or less, and more preferably 1.70 g/cm$^3$ or less.

The carbon material (A) has a circularity of preferably from 0.88 to 0.99, more preferably from 0.90 to 0.98, and still more preferably from 0.92 to 0.97. Here, the circularity of the carbon material (A) is preferably 0.88 or more, more preferably 0.90 or more, and still more preferably 0.92 or more, since the curvature of lithium ion diffusion is reduced, the movement of the electrolytic solution into the voids between the particles is smooth, and the rapid charge and discharge characteristics are excellent. In addition, the circularity of the carbon material (A) is preferably 0.99 or less, more preferably 0.98 or less, and still more preferably 0.97 or less, since the contact between carbon materials can be ensured, and the cycle characteristics are excellent.

In the present description, the circularity is calculated according to the following formula (6) after measuring the particle size distribution of equivalent circle diameters by flow type particle image analysis.

Specifically, ion-exchanged water is used as a dispersion medium, polyoxyethylene sorbitan monolaurate is used as a surfactant, and ultrasonic waves are used for dispersion to obtain a dispersion liquid. Thereafter, the shape of the particles is photographed using a flow type image analyzer. From images of at least 1000 particles or more, the circularity of particles having equivalent circle diameters in the range of from 1.5 $\mu$m to 40 $\mu$m is averaged to obtain the circularity.

$$\text{[Circularity]} = \text{[perimeter of equivalent circle having area same as particle projection shape]/[actual perimeter of particle projection shape]} \quad (6)$$

(Method for Producing Carbon Material (A))

The method for producing the carbon material (A) is not particularly limited as long as the carbon material (A) can be produced to contain graphite containing an amorphous carbonaceous material or a graphite material, to have two or more peaks in a pore size distribution measured by a mercury porosimetry, and to make the cumulative pore volume y (mL/g) in a range where a pore diameter is equal to or smaller than a pore diameter at a local minimum value between a peak of a smallest pore diameter and a peak of a second smallest pore diameter in the pore size distribution and the coating rate x (%) of the amorphous carbonaceous material or the graphite material in the graphite satisfy the above formula (1). For example, a preferred method is to subject a raw material of a carbon material to a spheroidization treatment in the presence of a granulating agent, to perform a pressurization treatment, and impregnate the obtained mixture with an amorphous carbon precursor or a graphite material precursor, since the pores in the particles can be made dense and the cumulative pore volume y can be efficiently reduced. Specifically, a production method including the following step (1) to step (6) is preferred.

Step (1): a step of adjusting a particle size of a raw material of a carbon material

Step (2): a step of mixing the raw material of a carbon material with a granulating agent
Step (3): a step of subjecting the carbon material raw material to a spheroidization treatment
Step (4): a step of removing the granulating agent
Step (5): a step of performing a pressurization treatment
Step (6): a step of impregnating an amorphous carbonaceous material or a graphite material

Hereinafter, the step (1) to the step (6) will be described, but steps other than the step (1) to the step (6) may be included before and after each step, and the production method is not limited to a production method including the step (1) to the step (6).

(Step (1))

The step (1) is a step of adjusting a particle size of the raw material of a carbon material.

The raw material of a carbon material is graphite, is preferably natural graphite and artificial graphite since they have high crystallinity and an excellent capacity, and is more preferably natural graphite since it has higher crystallinity and a more excellent capacity, and does not require a heat treatment during production. The graphite preferably contains few impurities, and if necessary, is preferably used after being subj ected to a purification treatment.

Examples of the natural graphite include amorphous graphite, vein graphite, and flake graphite. Among these types of natural graphite, vein graphite and flake graphite are preferred, and flake graphite is more preferred because of having a high degree of graphitization and containing few impurities.

Examples of the artificial graphite include those obtained by subjecting, to heating at 2500°C or higher and graphitization, organic substances such as coal tar pitch, a coal-based heavy oil, an atmospheric residual oil, petroleum-based heavy oil, aromatic hydrocarbons, a nitrogen-containing cyclic compound, a sulfur-containing cyclic compound, polyphenylene, polyvinyl chloride, polyvinyl alcohol, polyacrylonitrile, polyvinyl butyral, a natural polymer, polyphenylene sulfide, polyphenylene oxide, a furfuryl alcohol resin, a phenol-formaldehyde resin, and an imide resin.

The raw material of a carbon material has a d002 value of preferably 3.360 Å or less, and more preferably 3.357 Å or less since the graphite is highly crystalline and has a sufficient charge and discharge capacity. The lower limit of the d002 value is not particularly limited, and is theoretically 3.354 Å or more.

The raw material of a carbon material has Lc of preferably 900 Å or more, and more preferably 1000 Å or more since the graphite is highly crystalline and has a sufficient charge and discharge capacity. The upper limit of the Lc is not particularly limited, and the upper measurement limit is 1000 Å.

A purity of the raw material of a carbon material is preferably 99.0% or more, more preferably 99.5% or more, still more preferably 99.9% or more, and particularly preferably 100%, since the capacity and the battery safety are excellent.

In the present description, the purity is a value obtained by accurately weighing about 10 g of a sufficiently dried raw material of a carbon material, heating it at 815°C for 10 hours in the atmosphere, and calculating the mass of the raw material of a carbon material before and after heating.

The raw material of a carbon material has a volume-based average particle diameter (d50) of preferably from 1 to 150 $\mu$m, more preferably from 3 to 130 $\mu$m, and still more preferably from 5 to 120 $\mu$m. Here, the volume-based average particle diameter of the raw material of a carbon material is preferably 1 $\mu$m or more, more preferably 3 $\mu$m or more, and still more preferably 5 $\mu$m or more, since the transportability is excellent. In addition, the volume-based average particle diameter of the raw material of a carbon material is preferably 150 $\mu$m or less, more preferably 130 $\mu$m or less, and still more preferably 120 $\mu$m or less, since the productivity is excellent.

The raw material of a carbon material has a specific surface area (AS) of preferably 1.0 m$^2$/g or more, more preferably 1.5 m$^2$/g or more, and still more preferably 2.0 m$^2$/g or more since the shape can be controlled, and has a specific surface area (AS) of preferably 30.0 m$^2$/g or less, more preferably 20.0 m$^2$/g or less, and still more preferably 10.0 m$^2$/g or less since the irreversible capacity control is excellent.

The raw material of a carbon material has a tap density of preferably from 0.60 to 1.40 g/cm$^3$, more preferably from 0.70 to 1.30 g/cm$^3$, and still more preferably from 0.80 to 1.20 g/cm$^3$. Here, the tap density of the raw material of a carbon material is preferably 0.60 g/cm$^3$ or more, more preferably 0.70 g/cm$^3$ or more, and still more preferably 0.80 g/cm$^3$ or more, since the transportability is excellent. In addition, the tap density of the raw material of a carbon material is preferably 1.40 g/cm$^3$ or less, more preferably 1.30 g/cm$^3$ or less, and still more preferably 1.20 g/cm$^3$ or less, since control during pulverization is easy.

The method of adjusting the particle size of the raw material of a carbon material is not particularly limited as long as the particle size can be adjusted to achieve the volume-based average particle diameter and specific surface area to be described later, and pulverization, crushing, and classification may be performed.

A well-known method can be used for pulverization, crushing, and classification.

The raw material of a carbon material has a volume-based average particle diameter (d50) after the particle size adjustment of preferably from 1 to 20 μm, more preferably from 2 to 15 μm, and still more preferably from 3 to 12 μm. Here, the volume-based average particle diameter after the particle size adjustment is preferably 1 μm or more, more preferably 2 μm or more, and still more preferably 3 μm or more, and is preferably 20 μm or less, more preferably 15 μm or less, and still more preferably 12 μm or less, since the spheroidization treatment is easily controlled.

The raw material of a carbon material has a specific surface area (SA) after the particle size adjustment of preferably from 5.0 to 30.0 $m^2/g$, more preferably from 7.0 to 25.0 $m^2/g$, and still more preferably from 9.0 to 20.0 $m^2/g$. Here, the specific surface area after the particle size adjustment is preferably 5.0 $m^2/g$ or more, more preferably 7.0 $m^2/g$ or more, still more preferably 7.5 $m^2/g$ or more, even more preferably 9.0 $m^2/g$ or more, and particularly preferably 10.0 $m^2/g$ or more, since a part where lithium ions go in and out is ensured, and the rapid charge and discharge characteristics and the low temperature input and output characteristics are excellent. In addition, the specific surface area after the particle size adjustment is preferably 30.0 $m^2/g$ or less, more preferably 25.0 $m^2/g$ or less, and still more preferably 20.0 $m^2/g$ or less, since side reactions with an electrolytic solution are prevented, a decrease in initial charge and discharge efficiency and an increase in gas generation amount are prevented, and the battery capacity is improved.

The raw material of a carbon material has a tap density after the particle size adjustment of preferably from 0.40 to 1.40 $g/cm^3$, more preferably from 0.450 to 1.30 $g/cm^3$, and still more preferably from 0.50 to 1.20 $g/cm^3$. Here, the tap density after the particle size adjustment is preferably 0.40 $g/cm^3$ or more, more preferably 0.45 $g/cm^3$ or more, still more preferably 0.50 $g/cm^3$ or more, even more preferably 0.60 $g/cm^3$ or more, even still more preferably 0.70 $g/cm^3$ or more, and particularly preferably 0.80 $g/cm^3$ or more, since the degree of sphericity in the spheroidization treatment is excellent. In addition, the tap density after the particle size adjustment is preferably 1.40 $g/cm^3$ or less, more preferably 1.30 $g/cm^3$ or less, and still more preferably 1.20 $g/cm^3$ or less.

(Step (2))

The step (2) is a step of mixing the raw material of a carbon material with a granulating agent.

The granulating agent is preferably a liquid when the raw material of a carbon material is subjected to a spheroidization treatment.

In addition, the granulating agent preferably contains an organic compound to be amorphous carbon.

Further, the granulating agent is preferably one containing no organic solvent, one containing an organic solvent, at least one of which does not have a flash point, or one containing an organic solvent having a flash point of 5°C or higher.

When the granulating agent satisfies the above requirements, once the raw material of a carbon material is subjected to a spheroidization treatment, the granulating agent forms a liquid bridge between the raw materials of a carbon material, an attractive force is generated between the raw materials of a carbon material by a capillary negative pressure of the liquid bridge and the surface tension of the liquid, and a distance between the raw materials of a carbon material can be effectively shortened.

Examples of the method of mixing the raw material of a carbon material with the granulating agent include a method of mixing the raw material of a carbon material with a granulating agent using a mixer or a kneader, and a method of adding the raw material of a carbon material to a solution in which a granulating agent is dissolved and removing the solvent. Among these methods, the method of mixing the raw material of a carbon material with a granulating agent using a mixer or a kneader is preferred since it can efficiently reduce the amount of micropores of from 1 nm to 4 nm.

The amount of the granulating agent to be added is preferably from 0.1 to 100 parts by mass, more preferably from 1 to 80 parts by mass, and still more preferably from 10 to 50 parts by mass with respect to 100 parts by mass of the raw material of a carbon material. Here, the amount of the granulating agent to be added is preferably 0.1 parts by mass or more, more preferably 1 part by mass or more, and still more preferably 10 parts by mass or more, and is preferably 1000 parts by mass or less, more preferably 100 parts by mass or less, more preferably 80 parts by mass or less, and still more preferably 50 parts by mass or less with respect to 100 parts by mass of the raw material of a carbon material, since it is possible to prevent a decrease in degree of sphericity due to a decrease in adhesive force between the raw materials of a carbon material, and it is possible to prevent a decrease in productivity due to the adhesion of the raw material of a carbon material to the device.

(Step (3))

The step (3) is a step of subjecting the raw material of a carbon material to a spheroidization treatment.

By subjecting the raw material of a carbon material to a spheroidization treatment, the rapid charge and discharge characteristics are excellent.

The method of subjecting the raw material of a carbon material to a spheroidization treatment is preferably a method of imparting mechanical energy to subject the raw material of a carbon material to the spheroidization treatment since the shape of the particles can be easily controlled.

Examples of the mechanical energy include impact, compression, friction, and a shear force. These types of mechanical energy may be used alone or in combination of two or more thereof.

A device which imparts mechanical energy may be used for the method of imparting mechanical energy to subject the raw material of a carbon material to the spheroidization treatment.

The granulating agent for subjecting the raw material of a carbon material to a spheroidization treatment has a viscosity of preferably from 1 to 1000 cP, more preferably from 5 to 800 cP, still more preferably from 10 to 600 cP, and even more preferably from 20 to 500 cP. Here, the viscosity of the above granulating agent is preferably 1 cP or more, more preferably 5 cP or more, still more preferably 10 cP or more, and particularly preferably 20 cP or more, and is preferably 1000 cP or less, more preferably 800 cP or less, still more preferably 600 cP or less, and particularly preferably 500 cP or less, since re-detachment from the spheroidized particles due to the impact force with a rotor and a casing during the spheroidization treatment can be prevented, the granulating agent enters micropores of from 1 nm to 4 nm and becomes amorphous carbon, which can reduce the amount of the micropores, and the low temperature input and output characteristics and the high temperature storage characteristics are excellent.

The viscosity of the granulating agent for subjecting the raw material of a carbon material to a spheroidization treatment can be adjusted by the amount of the organic solvent and the temperature in the spheroidization treatment.

In the present description, the viscosity is a value measured at 25°C using a rheometer. When a shear stress at a shear rate of 100 s$^{-1}$ is 0.1 Pa or more, it is a value measured at a shear rate of 100 s$^{-1}$, when the shear stress at a shear rate of 100 s$^{-1}$ is less than 0.1 Pa, it is a value measured at 1000 s$^{-1}$, and when the shear stress at a shear rate of 1000 s$^{-1}$ is less than 0.1 Pa, it is a value measured at a shear rate at which the shear stress is 0.1 Pa or more.

When the raw material of a carbon material is subjected to a spheroidization treatment, the raw material of a carbon material may be granulated in the presence of other substances. Examples of other substances include metals which can be alloyed with lithium, oxides thereof, amorphous carbon, and raw coke.

When the raw material of a carbon material is subjected to a spheroidization treatment, it is preferable to perform the spheroidization treatment with adhering the fine powder generated during the spheroidization treatment to the surface of the carbon material. By performing the spheroidization treatment with adhering the fine powder generated during the spheroidization treatment to the surface of the carbon material, when the carbon material is coated with an amorphous carbonaceous material or a graphite material, the amount of voids in the carbon material is effectively reduced. In addition, the amount of edges which can be used as intercalation and deintercalation sites for lithium ions increases, and the electrolytic solution efficiently spreads through the voids in the carbon material, resulting in excellent low temperature input and output characteristics and cycle characteristics.

As for the fine powder, not only the fine powder generated during the spheroidization treatment, but also the fine powder whose particle size is adjusted may be separately added.

In order to effectively adhere the fine powder to the surface of the carbon material, it is preferable to strengthen the adhesive force between carbon material particles and carbon material particles, between the carbon material particles and fine powder particles, and between the fine powder particles and the fine powder particles.

Examples of the adhesive force between particles include a Van der Waals force and an electrostatic attractive force which are not mediated by inclusions between particles, and a physical cross-linking force and a chemical cross-linking force mediated by inclusions between particles.

With a boundary of the volume-based average particle diameter (d50) of 100 μm, the smaller the van der Waals force is, the more [self-weight] < [adhesive force] is satisfied. Therefore, the smaller the volume-based average particle diameter of the raw material of a carbon material is, the stronger the adhesive force between the particles is, and the fine powder adheres to the carbon material and is more likely to be in a state of being included in the spheroidized carbon material, which is preferred.

The step (2) and the step (3) may be performed at the same time by charging the raw material of a carbon material and the granulating agent into a spheroidization treatment device.

(Step (4))

The step (4) is a step of removing the granulating agent.

The granulating agent may be completely removed or partially removed.

When a granulating agent containing an organic solvent is used, it is preferable to remove the organic solvent as well.

Examples of the method for removing the granulating agent and the method for removing the organic solvent include a method of washing with a solvent, and a method of volatilization and decomposition by heating. Among these methods, the method of volatilization and decomposition by heating is preferred since the productivity and the removal efficiency are excellent.

(Step (5))

The step (5) is a step of performing a pressurization treatment.

Examples of the pressurization treatment include an isotropic pressurization treatment and an anisotropic pressurization treatment. Among these pressurization treatments, the isotropic pressurization treatment is preferred since the obtained carbon material (A) can be controlled to satisfy formula (1).

Examples of pressurization means include a hydrostatic isotropic pressurization treatment using water as a pressurization medium, an isotropic pressurization treatment by a pneumatic pressure using a gas such as air as a pressurization medium, and a pressurization treatment in which a mold is filled and pressed in a certain direction with a uniaxial press.

The applied pressure is preferably from 50 to 300 MPa, more preferably from 100 to 280 MPa, and still more preferably from 150 to 260 MPa. Here, the applied pressure is preferably 50 MPa or more, more preferably 100 MPa or more, and still more preferably 150 MPa or more, and is preferably 300 MPa or less, more preferably 280 MPa or less, and still more preferably 260 MPa or less, since it is easy to control such that the obtained carbon material (A) satisfies formula (1).

The step (5) may be performed at any timing of the step (1) to the step (6), and is preferably between the step (4) and the step (6) since the pressurization can be efficiently performed in a state where excess granulating agent is removed.

(Step (6))

The step (6) is a step of impregnating an amorphous carbonaceous material or a graphite material.

By impregnating the carbon material with an amorphous carbonaceous material or a graphite material, it is possible to prevent a side reaction between the negative electrode and the electrolytic solution, resulting in a high capacity and excellent low temperature input and output characteristics and high temperature storage characteristics.

The amorphous carbonaceous material refers to carbon having a d002 value of 0.340 nm or more.

The graphite material refers to graphite having a d002 value of less than 0.340 nm.

The method of impregnating the carbon material with an amorphous carbonaceous material or a graphite material is preferably a method of mixing the carbon material with an amorphous carbonaceous material precursor or a graphite material precursor, performing heating in a non-oxidizing atmosphere, and subjecting the amorphous carbonaceous material precursor to amorphous carbonization or the graphite material precursor to graphitization, since it is easy to control the amount of voids in the particles.

Examples of the method of mixing the carbon material with an amorphous carbonaceous material precursor or a graphite material precursor include a method of mixing a carbon material with an amorphous carbonaceous material precursor or a graphite material precursor using a mixer or a kneader, and a method of adding a carbon material to a solution in which an amorphous carbonaceous material precursor or a graphite material precursor is dissolved and removing the solvent. Among these methods, the method of mixing the carbon material with the amorphous carbonaceous material precursor or the graphite material precursor using a mixer or a kneader is preferred since it can efficiently reduce the amount of micropores of 1 nm to 4 nm.

A mixing ratio of the carbon material and the amorphous carbonaceous material precursor or the graphite material precursor may be appropriately set so as to obtain a desired coating rate x.

The atmosphere during the heating is not particularly limited as long as it is a non-oxidizing atmosphere. Nitrogen, argon, and carbon dioxide are preferred, and nitrogen is more preferred, since the formation of micropores due to oxidation can be prevented.

An oxygen concentration is preferably 1 vol% or less, and more preferably 0.1 vol% or less, since it is easy to control such that the obtained carbon material (A) satisfies the formula (1). The lower limit of the oxygen concentration is not particularly limited, and is generally 0 vol% or more.

The heating temperature differs between the amorphous carbonization of the amorphous carbonaceous material precursor and the graphitization of the graphite material precursor.

The heating temperature for the amorphous carbonization of the amorphous carbonaceous material precursor is not particularly limited as long as it is a temperature at which a crystal structure equivalent to the crystal structure of the graphite is not reached, and is preferably from 500°C to 2000°C, more preferably from 600°C to 1800°C, and still more preferably from 700°C to 1600°C. Here, the above heating temperature is preferably 500°C or higher, more preferably 600°C or higher, and still more preferably 700°C or higher, and is preferably 2000°C or lower, more preferably 1800°C or lower, and still more preferably 1600°C or lower.

The heating temperature for the graphitization of the graphite material precursor is not particularly limited as long as it is a temperature at which a crystal structure equivalent to the crystal structure of the graphite is reached, and is preferably from 2100°C to 3300°C, more preferably from 2500°C to 3200°C, and still more preferably from 2700°C to 3100°C. Here, the above heating temperature is preferably 2100°C or higher, more preferably 2500°C or higher, and still more preferably 2700°C or higher, and is preferably 3300°C or lower, more preferably 3200°C or lower, and still more preferably 3100°C or lower.

The heating time is preferably from 0.1 to 1000 hours, and more preferably from 1 to 100 hours. Here, the heating time is preferably 0.1 hours or longer, more preferably 1 hour or longer, and is preferably 1000 hours or shorter, more preferably 100 hours or shorter, since it is easy to control such that the obtained carbon material (A) satisfies formula (1).

Examples of the amorphous carbonaceous material precursor or the graphite material precursor include tar, pitch, aromatic hydrocarbons such as naphthalene and anthracene, and thermoplastic resins such as a phenol resin and a polyvinyl alcohol resin. The precursors may be used alone or in combination of two or more thereof. Among these precursors, tar, pitch, and aromatic hydrocarbons are preferred since they easily develop a carbon structure and coating can be performed with a small amount, and one having a carbon residue rate of 50% or more is more preferred, and one having a carbon residue rate of 60% or more is still more preferred since it is easy to control such that the obtained carbon material (A) satisfies formula (1).

An ash content in the amorphous carbonaceous material precursor or the graphite material precursor is preferably from 0.00001 mass% to 1 mass% with respect to 100 mass% of the amorphous carbonaceous material precursor or the graphite material precursor. Here, the above ash content preferably 0.00001 mass% or more, preferably 1 mass% or less, more preferably 0.5 mass% or less, and still more preferably 0.1 mass% or less with respect to 100 mass% of the amorphous carbonaceous material precursor or the graphite material precursor, since it is easy to control such that the obtained carbon material (A) satisfies formula (1).

A metal impurity content in the amorphous carbonaceous material precursor or the graphite material precursor is preferably from 0.1 to 1000 ppm by mass. Here, the above metal impurity content is preferably 0.1 ppm by mass or more, and is preferably 1000 ppm by mass or less, more preferably 500 ppm by mass or less, and still more preferably 100 ppm by mass or less, since it is easy to control such that the obtained carbon material (A) satisfies formula (1).

In the present description, the metal impurity content is a value obtained by dividing the total content of Fe, Al, Si, and Ca in the amorphous carbonaceous material precursor or the graphite material precursor by the carbon residue rate.

A Qi (quinoline insoluble matter) in the amorphous carbonaceous material precursor or the graphite material precursor is preferably 5 mass% or less, and more preferably 3 mass% or less with respect to 100 mass% of the amorphous carbonaceous material precursor or the graphite material precursor, since it is easy to control such that the obtained carbon material (A) satisfies formula (1). The lower limit of the above Oi is not particularly limited, and is generally 0 mass% or more.

In order to make the volume-based average particle diameter of the carbon material (A) within a desired range, the carbon material obtained through the step (1) to the step (6) may be subjected to pulverization, crushing, and classification if necessary.

A well-known method can be used for pulverization, crushing, and classification.

(Carbon Material (B))

The carbon material (B) has a pellet density of 1.80 g/cm$^3$ or more.

When the carbon material composition according to the present embodiment contains the above carbon material (B), once the above carbon material (B) is used in combination with the above carbon material (A), the electrode is selectively highly densified when pressed to a predetermined density. Further, since the surface area of the above carbon material (B) does not easily increase even if it is deformed during pressing, by using the carbon material (A) in combination with the carbon material (B), it is possible to prevent an increase in reaction area of the electrode plate when used at a high density.

The pellet density of the carbon material (B) is from 1.80 g/cm$^3$ to 2.262 g/cm$^3$. Here, the pellet density of the carbon material (B) is preferably 1.80 g/cm$^3$ or more, more preferably 1.85 g/cm$^3$ or more, still more preferably 1.88 g/cm$^3$ or more, even more preferably 1.90 g/cm$^3$ or more, and is preferably 2.262 g/cm$^3$ or less, since the compressibility during pressing is excellent.

In order to set the pellet density of the carbon material (B) to be 1.80 g/cm$^3$ or more, the carbon material (B) is preferably flake-spheroidized natural graphite since it is preferable that the particles have appropriate voids and the flakes are appropriately laminated.

(Physical Properties of Carbon Material (B))

The carbon material (B) has a d002 value of preferably 3.360 Å or less, and more preferably 3.357 Å or less, since the higher crystalline the graphite is, the more excellent the compressibility during pressing is, and a sufficient charge and discharge capacity is obtained. The lower limit of the above d002 value is not particularly limited, and is 3.354 Å or more as a theoretical value.

The carbon material (B) has Lc of preferably 900 Å or more, and more preferably 1000 Å or more, since the higher crystalline the graphite is, the more excellent the compressibility during pressing is, and a sufficient charge and discharge capacity is obtained. The upper limit of the above Lc is not particularly limited, and the upper measurement limit is 1000 Å.

The carbon material (B) has a volume-based average particle diameter (d50) of preferably from 1 to 50 $\mu$m, more preferably from 4 to 30 $\mu$m, and still more preferably from 10 to 25 $\mu$m. Here, the volume-based average particle diameter of the carbon material (B) is preferably 1 $\mu$m or more, more preferably 4 $\mu$m or more, and still more preferably 10 $\mu$m or more, since an irreversible capacity increase and a loss of an initial battery capacity are prevented. In addition, the volume-based average particle diameter of the carbon material (B) is preferably 50 $\mu$m or less, more preferably 30 $\mu$m or less, and still more preferably 25 $\mu$m or less, since step defects such as streaking during electrode plate preparation can be prevented, and the rapid charge and discharge characteristics and the low temperature input and output characteristics are excellent.

The carbon material (B) has a specific surface area (SA) of preferably from 3.0 to 11.0 $m^2$/g, more preferably from 4.0 to 9.0 $m^2$/g, and still more preferably from 5.0 to 8.0 $m^2$/g. Here, the specific surface area of the carbon material (B) is preferably 3.0 $m^2$/g or more, more preferably 4.0 $m^2$/g or more, and still more preferably 5.0 $m^2$/g or more, since a part where lithium ions go in and out is ensured, and the rapid charge and discharge characteristics and the low temperature input and output characteristics are excellent. In addition, the specific surface area of the carbon material (B) is preferably 11.0 $m^2$/g or less, more preferably 9.0 $m^2$/g or less, and still more preferably 8.0 $m^2$/g or less, since side reactions with an electrolytic solution are prevented, a decrease in initial charge and discharge efficiency and an increase in gas generation amount are prevented, and the battery capacity is improved.

The carbon material (B) has a tap density of preferably from 0.70 to 1.30 $g/cm^3$, more preferably from 0.80 to 1.20 $g/cm^3$, and still more preferably from 0.90 to 1.10 $g/cm^3$. Here, the tap density of the carbon material (B) is preferably 0.70 $g/cm^3$ or more, more preferably 0.80 $g/cm^3$ or more, and still more preferably 0.90 $g/cm^3$ or more, since step defects such as streaking during electrode plate preparation can be prevented, the rollability is good and it is easy to form a high-density negative electrode sheet due to the increase in filling property, the curvature of a movement path of lithium ions is reduced when it is made into an electrode body, the movement of the electrolytic solution is smooth due to a uniform shape of the voids between the particles, and the rapid charge and discharge characteristics are improved. In addition, the tap density of the carbon material (B) is preferably 1.30 $g/cm^3$ or less, more preferably 1.20 $g/cm^3$ or less, and still more preferably 1.10 $g/cm^3$ or less since the particles do not become too hard and have excellent electrode pressability due to an appropriate amount of space on the surface and inside the particles, and the rapid charge and discharge characteristics and the low temperature input and output characteristics are excellent.

The carbon material (B) has a circularity of preferably from 0.88 to 0.99, more preferably from 0.90 to 0.98, and still more preferably from 0.92 to 0.97. Here, the circularity of the carbon material (B) is preferably 0.88 or more, more preferably 0.90 or more, and still more preferably 0.92 or more, since the curvature of lithium ion diffusion is reduced, the movement of the electrolytic solution into the voids between the particles is smooth, and the rapid charge and discharge characteristics are excellent. In addition, the circularity of the carbon material (B) is preferably 0.99 or less, more preferably 0.98 or less, and still more preferably 0.97 or less, since the contact between carbon materials can be ensured, and the cycle characteristics are excellent.

The carbon material (B) has a cumulative pore volume of preferably from 0.030 mL/g to 0.140 mL/g, more preferably from 0.040 mL/g to 0.130 mL/g, and still more preferably from 0.050 mL/g to 0.100 mL/g. Here, the cumulative pore volume of the carbon material (B) is preferably 0.030 mL/g or more, more preferably 0.040 mL/g or more, and still more preferably 0.050 mL/g or more since moderate deformation is easy during pressing. In addition, the cumulative pore volume of the carbon material (B) is preferably 0.140 mL/g or less, more preferably 0.130 mL/g or less, still more preferably 0.120 mL/g or less, even more preferably 0.100 mL/g or less, even still more preferably 0.090 mL/g or less, and particularly preferably 0.070 mL/g or less.

(Method for Producing Carbon Material (B))

The method for producing the carbon material (B) is not particularly limited as long as the carbon material (B) can be produced to satisfy a pellet density of 1.80 $g/cm^3$ or more. It is preferable to use flake-spheroidized natural graphite as the carbon material (B) since it has high crystallinity and excellent compressibility.

A raw material of the carbon material (B) is preferably graphite, is more preferably natural graphite and artificial graphite since they have high crystallinity and an excellent capacity, and is still more preferably natural graphite since it has higher crystallinity and a more excellent capacity, and does not require a heat treatment during production. The graphite preferably contains few impurities, and if necessary, is preferably used after being subjected to a purification treatment.

Examples of the natural graphite include amorphous graphite, vein graphite, and flake graphite. Among these types of natural graphite, vein graphite and flake graphite are preferred, and flake graphite is more preferred because of having a high degree of graphitization and containing few impurities.

Examples of the artificial graphite include those obtained by subjecting, to heating at 2500°C or higher and graphitization, organic substances such as coal tar pitch, a coal-based heavy oil, an atmospheric residual oil, petroleum-based heavy oil, aromatic hydrocarbons, a nitrogen-containing cyclic compound, a sulfur-containing cyclic compound, polyphenylene, polyvinyl chloride, polyvinyl alcohol, polyacrylonitrile, polyvinyl butyral, a natural polymer, polyphenylene sulfide, polyphenylene oxide, a furfuryl alcohol resin, a phenol-formaldehyde resin, and an imide resin.

The method for a spheroidization treatment is preferably a method of imparting mechanical energy to perform the spheroidization treatment since the shape of the particles can be easily controlled.

Examples of the mechanical energy include impact, compression, friction, and a shear force. These types of mechanical energy may be used alone or in combination of two or more thereof.

A device that imparts mechanical energy may be used for the method of imparting mechanical energy to perform the spheroidization treatment.

During the spheroidization treatment, the raw material may be granulated in the presence of other substances. Examples of other substances include metals that can be alloyed with lithium, oxides thereof, and raw coke.

(Composition of Carbon Material Composition)

The carbon material (A) has a content of preferably from 40 mass% to 90 mass%, more preferably from 45 mass% to 85 mass%, and still more preferably from 55 mass% to 75 mass%, with respect to 100 mass% of the carbon material composition. Here, the content of the carbon material (A) is preferably 40 mass% or more, more preferably 45 mass% or more, and still more preferably 55 mass% or more, with respect to 100 mass% of the carbon material composition, since the expansion of the electrode plate can be reduced to a low level. In addition, the content of the carbon material (A) is preferably 90 mass% or less, more preferably 85 mass% or less, and still more preferably 75 mass% or less, since high initial efficiency of the secondary battery can be maintained.

The carbon material (B) has a content of preferably from 10 mass% to 60 mass%, more preferably from 15 mass% to 55 mass%, and still more preferably from 25 mass% to 45 mass%, with respect to 100 mass% of the carbon material composition. Here, the content of the carbon material (B) is preferably 10 mass% or more, more preferably 15 mass% or more, and still more preferably 25 mass% or more, with respect to 100 mass% of the carbon material composition, since initial efficiency of the secondary battery can be highly maintained. In addition, the content of the carbon material (B) is preferably 60 mass% or less, more preferably 55 mass% or less, and still more preferably 45 mass% or less, since the expansion of the electrode plate can be reduced to a low level.

The carbon material composition according to the present embodiment may contain other substances in addition to the carbon material (A) and the carbon material (B). Examples of other substances include metals that can be alloyed with lithium, oxides thereof, and a conductive material.

A total content of other substances is preferably 20 mass% or less, and more preferably 10 mass% or less, since the original functions of the carbon material (A) and the carbon material (B) are not impaired.

(Physical Properties of Carbon Material Composition)

The carbon material composition has a volume-based average particle diameter (d50) of preferably from 1 to 50 $\mu$m, more preferably from 4 to 30 $\mu$m, and still more preferably from 10 to 25 $\mu$m. Here, the volume-based average particle diameter of the carbon material composition is preferably 1 $\mu$m or more, more preferably 4 $\mu$m or more, and still more preferably 10 $\mu$m or more, since an irreversible capacity increase and a loss of an initial battery capacity are prevented. In addition, the volume-based average particle diameter of the carbon material composition is preferably 50 $\mu$m or less, more preferably 30 $\mu$m or less, and still more preferably 25 $\mu$m or less since step defects such as streaking during electrode plate preparation can be prevented, and the rapid charge and discharge characteristics and the low temperature input and output characteristics are excellent.

The carbon material composition has a specific surface area (SA) of preferably from 1.0 to 11.0 m$^2$/g, more preferably from 2.0 to 9.0 m$^2$/g, and still more preferably from 3.0 to 8.0 m$^2$/g. Here, the specific surface area of the carbon material composition is preferably 1.0 m$^2$/g or more, more preferably 2.0 m$^2$/g or more, and still more preferably 3.0 m$^2$/g or more, since a part where lithium ions go in and out is ensured, and the rapid charge and discharge characteristics and the low temperature input and output characteristics are excellent. In addition, the specific surface area of the carbon material composition is preferably 11.0 m$^2$/g or less, more preferably 9.0 m$^2$/g or less, and still more preferably 8.0 m$^2$/g or less, since side reactions with an electrolytic solution are prevented, a decrease in initial charge and discharge efficiency and an increase in gas generation amount are prevented, and the battery capacity is improved.

The carbon material composition has a tap density of preferably from 0.70 g/cm$^3$ to 1.40 g/cm$^3$, more preferably

from 0.80 g/cm$^3$ to 1.30 g/cm$^3$, and still more preferably from 0.90 g/cm$^3$ to 1.10 g/cm$^3$. Here, the tap density of the carbon material composition is preferably 0.70 g/cm$^3$ or more, more preferably 0.80 g/cm$^3$ or more, and still more preferably 0.90 g/cm$^3$ or more, since step defects such as streaking during electrode plate preparation can be prevented, the rollability is good and it is easy to form a high-density negative electrode sheet due to the increase in filling property, the curvature of a movement path of lithium ions is reduced when it is made into an electrode body, the movement of the electrolytic solution is smooth due to a uniform shape of the voids between the particles, and the rapid charge and discharge characteristics are improved. In addition, the tap density of the carbon material composition is preferably 1.40 g/cm$^3$ or less, more preferably 1.30 g/cm$^3$ or less, and still more preferably 1.10 g/cm$^3$ or less since the particles do not become too hard and have excellent electrode pressability due to an appropriate amount of space on the surface and inside the particles, and the rapid charge and discharge characteristics and the low temperature input and output characteristics are excellent.

The carbon material composition has a circularity of preferably from 0.88 to 0.99, more preferably from 0.90 to 0.98, and still more preferably from 0.92 to 0.97. Here, the circularity of the carbon material composition is preferably 0.88 or more, more preferably 0.90 or more, and still more preferably 0.92 or more, since the curvature of lithium ion diffusion is reduced, the movement of the electrolytic solution into the voids between the particles is smooth, and the rapid charge and discharge characteristics are excellent. In addition, the circularity of the carbon material composition is preferably 0.99 or less, more preferably 0.98 or less, and still more preferably 0.97 or less, since the contact between carbon materials can be ensured, and the cycle characteristics are excellent.

The carbon material composition has a cumulative pore volume of preferably from 0.003 mL/g to 0.120 mL/g, more preferably from 0.005 mL/g to 0.090 mL/g, and still more preferably from 0.010 mL/g to 0.070 mL/g. Here, the cumulative pore volume of the carbon material composition is preferably 0.003 mL/g or more, more preferably 0.005 mL/g or more, and still more preferably 0.010 mL/g or more, and is preferably 0.120 mL/g or less, more preferably 0.090 mL/g or less, and still more preferably 0.070 mL/g or less, since moderate deformation is easy during pressing.

The carbon material composition has a pellet density of preferably from 1.40 to 1.80 g/cm$^3$, more preferably from 1.50 to 1.70 g/cm$^3$, and still more preferably from 1.55 to 1.60 g/cm$^3$. Here, the pellet density of the carbon material composition is preferably 1.40 g/cm$^3$ or more, more preferably 1.50 g/cm$^3$ or more, and still more preferably 1.55 g/cm$^3$ or more, and is preferably 1.80 g/cm$^3$ or less, more preferably 1.70 g/cm$^3$ or less, and still more preferably 1.60 g/cm$^3$ or less, since moderate deformation is easy during pressing.

(Method for Producing Carbon Material Composition)

The method for producing the carbon material composition according to the present embodiment includes a step of mixing the carbon material (A) described above with the carbon material (B) described above.

The mixing method is not particularly limited as long as the carbon material (A) and the carbon material (B) can be mixed to obtain a desired composition.

A ratio Rd50 of the volume-based average particle diameter (d50) of the carbon material (B) to the volume-based average particle diameter (d50) of the carbon material (A) ([volume-based average particle diameter of carbon material (B) (d50)]/[volume-based average particle diameter of carbon material (A) (d50)]) is preferably from 0.1 to 10, more preferably from 0.2 to 5, and still more preferably from 0.5 to 2. Here, the above ratio Rd50 is preferably 0.1 or more, more preferably 0.2 or more, and still more preferably 0.5 or more, and is preferably 10 or less, more preferably 5 or less, and still more preferably 2 or less.

When the ratio Rd50 is within the above range, the carbon material (B) can be present in gaps between the carbon materials (A), or the carbon material (A) can be present in gaps between the carbon materials (B). As a result, due to the presence of the carbon material (B) around the carbon material (A), the carbon material (B) is selectively deformed while the shape of the carbon material (A) is maintained, the carbon material composition is not destroyed during pressing even in use at a high density, and both high initial efficiency and low expansion can be achieved. In addition, the gap formed between the carbon material (A) and the carbon material (B) absorbs a volume change of the carbon material (A) and the carbon material (B) due to occlusion and release of lithium ions caused by charge and discharge. Therefore, it is possible to prevent disconnection of a conductive path due to the volume change of the carbon material (A) and the carbon material (B), improvement in cycle characteristics, the rapid charge and discharge characteristics, and a high capacity can be achieved.

A ratio RSA of the specific surface area (SA) of the carbon material (B) to the specific surface area (SA) of the carbon material (A) ([specific surface area (SA) of carbon material (B)]/[specific surface area (SA) of carbon material (A)]) is preferably from 0.01 to 100, more from preferably 0.1 to 10, and still more preferably from 0.2 to 5. Here, the above ratio RSA is preferably 0.01 or more, more preferably 0.1 or more, and still more preferably 0.2 or more, and is preferably 100 or less, more preferably 10 or less, still more preferably 6 or less, even more preferably 5 or less, and particularly preferably 3 or less.

When the ratio RSA is within the above range, a part where lithium ions go in and out is ensured, the rapid charge and discharge characteristics and the low temperature input and output characteristics are excellent, side reactions with an electrolytic solution are prevented, a decrease in initial charge and discharge efficiency and an increase in gas generation amount are prevented, and the battery capacity is improved.

A ratio RCPV of the cumulative pore volume of the carbon material (B) to the cumulative pore volume of the carbon material (A) ([cumulative pore volume of carbon material (B)]/[cumulative pore volume of carbon material (A)]) is preferably from 1 to 50, more preferably from 3 to 40, and still more preferably from 5 to 20. Here, the above ratio RCPV is preferably 1 or more, more preferably 3 or more, and still more preferably 5 or more, and is preferably 50 or less, more preferably 40 or less, and still more preferably 20 or less.

When the ratio RCPV is within the above range, the carbon material (B) is selectively deformed with respect to the carbon material (A) during electrode plate preparation, and both high initial efficiency and low expansion can be achieved even in case of use at a high density.

(Negative Electrode)

A negative electrode according to the present embodiment includes a current collector and an active material layer formed on the current collector, and the active material layer contains the carbon material composition according to the present embodiment. The carbon material composition according to the present embodiment has a function and effect as an active material for a negative electrode.

The method for producing the negative electrode is not particularly limited as long as the active material layer can be formed on the current collector. A method of coating a current collector with a slurry containing the carbon material composition according to the present embodiment and a binder resin and drying the slurry is preferred since it is inexpensive and has excellent productivity. The slurry may further contain a thickening agent.

It is preferable to pressurize to increase the density of the active material layer formed on the current collector, and to increase the battery capacity per unit volume of the active material layer after coating the current collector with the slurry containing the carbon material composition according to the present embodiment and the binder resin and drying the slurry.

The active material layer has a density of preferably 1.2 to 2.0 $g/cm^3$, and more preferably 1.5 to 1.8 $g/cm^3$. Here, the density of the active material layer is preferably 1.2 $g/cm^3$ or more, and more preferably 1.5 $g/cm^3$ or more since a decrease in battery capacity due to an increase in electrode thickness is prevented. In addition, the density of the active material layer is preferably 2.0 $g/cm^3$ or less, and more preferably 1.8 $g/cm^3$ or less since a decrease in amount of the voids in the electrode reduces the amount of the electrolytic solution retained in the voids, the mobility of alkali ions such as lithium ions is reduced, and deterioration in rapid charge and discharge characteristics is prevented.

(Secondary Battery)

A secondary battery according to the present embodiment includes a positive electrode, the negative electrode according to the present embodiment, and an electrolyte.

The positive electrode and the negative electrode according to the present embodiment are preferably capable of occluding and releasing lithium ions.

(Positive Electrode)

A well-known positive electrode can be used for the positive electrode.

(Electrolyte)

A well-known electrolyte can be used for the electrolyte.

(Separator)

In the secondary battery according to the present embodiment, it is preferable to interpose a separator between the positive electrode and the negative electrode. However, the secondary battery according to the present embodiment does not exclude those using a solid electrolyte as the electrolyte.

A well-known separator can be used for the separator.

The carbon material composition according to the present embodiment can maintain high initial efficiency of the secondary battery and can reduce the expansion of the electrode plate to a low level. Therefore, it can be preferably used as an active material for a negative electrode for a secondary battery, more preferably used as an active material for a negative electrode for a non-aqueous secondary battery, and particularly preferably used as an active material for a negative electrode for a lithium-ion secondary battery.

Examples

Hereinafter, the present invention will be described in more detail using Examples, but the present invention is not limited to the description of the following Examples unless it departs from the gist thereof.

(Method for Measuring Volume-based Average Particle Diameter)

In 10 mL of a 0.2 mass% aqueous solution of polyoxyethylene sorbitan monolaurate (trade name "Tween 20") as a surfactant, suspended was 0.01 g of a sample, the mixture was introduced into a laser diffraction/scattering type particle size distribution measuring device (model name "LA-920", manufactured by HORIBA, Ltd.), and was irradiated with 28 kHz ultrasonic waves at an output of 60 W for 1 minute. Then the volume-based median diameter was measured by the above measuring device, and the volume-based median diameter was taken as the volume-based average particle diameter.

(Method for Measuring Specific Surface Area)

Using a specific surface area measuring device (model name "Macsorb HM-1210", manufactured by Mountec Co., Ltd.), a sample was preliminarily dried under a reduced pressure at 350°C under a nitrogen flow for 15 minutes, and then cooled to the temperature of liquid nitrogen, and the specific surface area was measured by a nitrogen adsorption BET one-point method according to a gas flow method, using a nitrogen-helium mixed gas accurately adjusted such that the value of the relative pressure of nitrogen to the atmospheric pressure was 0.3.

(Method for Measuring Tap Density)

A value of density calculated based on a volume and a mass of a sample was taken as a tap density, when using a powder density meter (model name "Tap Denser KYT-3000", manufactured by SEISHIN ENTERPRISE Co., Ltd.), a carbon material was dropped through a sieve having an opening of 300 $\mu$m into a cylindrical tap cell having a diameter of 1.6 cm and a volume capacity of 20 cm$^3$, the cell was completely filled, and then tapping was performed at a stroke length of 10 mm 1000 times.

(Method for Measuring Cumulative Pore Volume y)

A carbon material weighed to a value of about 0.2 g was enclosed in a powder cell, and pretreated by deaeration at 25°C under vacuum (50 $\mu$mHg or less) for 10 minutes using a mercury porosimeter (model name "AutoPore 9520", manufactured by Micromeritics Instrument Corporation). Next, the pressure was reduced to 4 psia (about 28 kPa) to introduce mercury into the above cell and the pressure was increased in steps from 4 psia (about 28 kPa) to 40,000 psia (about 280 MPa) and then reduced to 25 psia (about 170 kPa). The number of steps during pressure increase was set to 80 or more, and the amount of mercury intrusion was measured after an equilibrium time of 10 seconds at each step. The pore size distribution was calculated based on a mercury intrusion curve thus obtained using the Washbum equation. The surface tension ($\gamma$) of mercury was calculated as 485 dyne/cm and the contact angle ($\psi$) as 140°. Based on the obtained results, a graph was created in which the horizontal axis was the pore diameter and the vertical axis was the pore volume. From this graph, the peak was confirmed, a local minimum value between a peak of a smallest pore diameter and a peak of a second smallest pore diameter (between two peaks on the smaller pore diameter side) was confirmed, and a cumulative pore volume in a range where a pore diameter is equal to or smaller than a pore diameter at this local minimum value was taken as y (mL/g).

(Method for Calculating Coating Rate x)

The coating rate x was calculated according to the following formula (3) based on a mixing ratio of a graphite and an amorphous carbonaceous material or a graphite material, and the firing yield after firing.

$$\text{Coating rate x (\%)} = ([\text{mass of sample after firing - mass of graphite}]/[\text{mass of sample after firing}]) \times 100$$

(3)

(Method for Measuring Pellet Density)

Into a mold having an inner diameter of 10 mm, two types of jigs were inserted : a shaft having a diameter of 10 mm and a length of 35 mm as a pressing jig, and a shaft having a diameter of 10 mm and a length of 6 mm as a receiving jig, and were set into a device capable of measuring the load and height during clamping (powder resistance measurement system, manufactured by Nittoseiko Analytech Co., Ltd.), followed by applying a load of 15 kgf with a hydraulic pump to measure the height of the jig. Thereafter, only the pressing jig was taken out, 0.6 g of a carbon material was added, and the pressing jig was inserted again. The mold was set on a hydraulic jack (high pressure jack, manufactured by AS ONE Corporation), a pressure valve was closed, and the pressure was gently increased to 0.9 t/cm$^2$, rapidly increased to 2.4 t/cm$^2$, and then held for 3 seconds. The hydraulic jack was released from the hand and wait for 60 seconds, so that the pressure valve was loosened and the pressure was reduced. Thereafter, the device capable of measuring the load and height during clamping was again set, a load of 15 kgf was applied with the hydraulic pump, and the height of the jig after pressurization was measured. At the same time, the mass of the carbon material after pressurization was measured, and the density calculated based on the difference in height of the jig and the mass was taken as the pellet density. The load per unit area was calculated based on the scale:500 kgf of the hydraulic jack, the cylinder diameter:22 mm of the hydraulic jack, and the inner diameter of the mold.

(Preparation of Negative Electrode Sheet)

An electrode plate having an active material layer with an active material layer density of 1.65 ± 0.03 g/cm$^3$ was prepared using carbon material compositions obtained in Examples and Comparative Examples as an active material of a negative electrode. Specifically, to 50.00 ± 0.02 g of each of the carbon material compositions obtained in Examples and Comparative Examples were added 50.00 ± 0.02 g of a 1 mass% carboxymethylcellulose sodium salt aqueous solution (0.50 g in terms of solid content) and 1.00 ± 0.05 g of an aqueous dispersion of a styrenebutadiene rubber having a weight average molecular weight of 270,000 (0.50 g in terms of solid content), and the mixture was stirred for 5 minutes with a hybrid mixer (manufactured by KEYENCE CORPORATION) and defoamed for 30 seconds to obtain a slurry.
Using a die coater, the obtained slurry was applied with a width of 10 cm onto a copper foil as a current collector having a thickness of 10 μm, such that 10.00 ± 0.20 mg/cm$^2$ of the negative electrode material adhered thereto, followed by drying. Then, the obtained copper foil was cut into a width of 5 cm and roll-pressed using a roller having a diameter of 20 cm to adjust the density of the active material layer to 1.65 ± 0.03 g/cm$^3$ to obtain a negative electrode sheet.

(Preparation of Positive Electrode Sheet)

In N-methylpyrrolidone, 85 mass% of nickel-manganese-lithium cobaltate (LiNiMnCoO$_2$) as an active material for a positive electrode, 10 mass% of acetylene black as a conductive material, and 5 mass% of polyvinylidene fluoride (PVdF) as a binder were mixed to obtain a slurry.
The obtained slurry was applied using a blade coater onto an aluminum foil having a thickness of 15 μm, as a current collector, such that 22.5 ± 0.2 mg/cm$^2$ of the positive electrode material adhered thereto, followed by drying at 130°C. Further, roll pressing was performed to adjust the density of the positive electrode material to 2.60 ± 0.05 g/cm$^3$ to obtain a positive electrode sheet.

(Preparation of Sheet-like Secondary Battery)

The obtained negative electrode sheet, a separator made of a polyethylene, and the obtained positive electrode sheet were laminated in order. The obtained laminate was wrapped in a cylindrical aluminum laminate film, and an electrolytic solution prepared by dissolving LiPF$_6$ in a mixed solvent containing ethylene carbonate, dimethyl carbonate, and ethyl methyl carbonate (volume ratio: 30:30:40) to be a concentration of 1 mol/L was injected thereto, followed by vacuum sealing, to prepare a sheet-like non-aqueous secondary battery. Further, in order to increase the adhesion between the electrodes, the sheet-like secondary battery was sandwiched between glass plates and pressurized.

(Method for Measuring Expansion of Secondary Battery)

Initial charge and discharge: at 25°C, 3 cycles at a voltage range of from 4.1 V to 3.0 V, and a current value of 0.2 C; and 2 cycles at a voltage range of from 4.2 V to 3.0 V and a current value of 0.2 C (constant voltage charge at 4.2 V for additional 2.5 hours during charge) were performed on the sheet-like secondary battery which had not undergone a charge and discharge cycle. At this point, the glass plates for fixing were removed, and the thickness of one secondary battery was measured at 9 points using a contact thickness gauge (manufactured by Mitutoyo Corporation), and the average was taken as the thickness before the cycle. Thereafter, the secondary battery was sandwiched between glass plates again, and then a cycle test was performed by charging and discharging 25 times under the conditions of 0.8 C-CCCV charge-0.8 C-CC discharge 1.5 V cut in a constant temperature bath at 45°C. Thereafter, the thickness of the secondary battery in the state of 0% SOC (states of charge) was measured at 9 points at the same locations as before the cycle, and the average was taken as the thickness after the cycle. The expansion of the secondary battery during the cycle was calculated based on a difference between the thickness before the cycle and the thickness after the cycle.

(Preparation of Coin-type Battery)

The obtained negative electrode sheet was punched into a disc shape having a diameter of 12.5 mm to form a negative electrode, and a lithium metal foil was punched into a disc shape having a diameter of 14 mm to form a counter electrode. A separator (made of a porous polyethylene film) impregnated with an electrolytic solution obtained by dissolving $LiPF_6$ in a mixed solvent containing ethylene carbonate and ethyl methyl carbonate (volume ratio: 30:70) to be a concentration of 1 mol/L was placed between the two electrodes, to prepare a 2016 coin-type battery.

(Method for Measuring Initial Efficiency of Secondary Battery)

The obtained coin-type battery was charged at a current density of 0.05 C until 5 mV against the lithium counter electrode, and further charged at a constant voltage of 5 mV until the current density reached 0.005 C, so that the negative electrode was doped with lithium. Then the coin-type battery was discharged at a current density of 0.1 C until 1.5 V against the lithium counter electrode. A ratio of the discharge capacity to the charge capacity at this time ((discharge capacity/charge capacity) $\times$ 100) was defined as the initial efficiency (%).

[Production Example 1] Production of Carbon Material (A-1)

Flake natural graphite having a volume-based average particle diameter of 100 $\mu$m was subjected to pulverization to obtain graphite having a volume-based average particle diameter of 11 $\mu$m. 100 parts by mass of the obtained graphite was mixed with 12 parts by mass of a granulating agent, then a spheroidization treatment was performed, and the granulating agent was removed by a heat treatment to obtain spheroidized graphite (volume-based average particle diameter: 16 $\mu$m, specific surface area: 15 m$^2$/g, tap density: 0.96 g/cm$^3$). A rubber container was filled with the obtained spheroidized graphite, the rubber container was sealed, and an isotropic pressurization treatment was performed, followed by crushing and classification to obtain a spheroidized graphite powder. The obtained spheroidized graphite powder was mixed with pitch (ash content: 0.02 mass%, metal impurity content: 20 ppm by mass, Qi: 1 mass%) as an amorphous carbonaceous material precursor and the pressure in the furnace was reduced to 10 torr or less. After restoring the pressure to the atmospheric pressure with nitrogen, the oxygen concentration in the furnace was reduced to 0.01 vol% or less by circulating nitrogen, and a heat treatment at 1300°C was performed in an inert gas. The obtained fired product was subjected to crushing and classification to obtain a carbon material (A-1).
Table 1 shows the evaluation results of the obtained carbon material (A-1).

[Production Example 2] Production of Carbon Material (A-2)

A carbon material (A-2) was obtained in the same manner as in Production Example 1, except that the mixing ratio of the spheroidized graphite powder to the amorphous carbonaceous material precursor was changed.
Table 1 shows the evaluation results of the obtained carbon material (A-2).

[Production Example 3] Production of Carbon Material (A-3)

A carbon material (A-3) was obtained in the same manner as in Production Example 1, except that the mixing ratio of the spheroidized graphite powder to the amorphous carbonaceous material precursor was changed.
Table 1 shows the evaluation results of the obtained carbon material (A-3).

[Production Example 4] Production of Carbon Material (A-4)

Flake natural graphite having a volume-based average particle diameter of 100 $\mu$m was subjected to a spheroidization treatment to obtain spheroidized graphite (volume-based average particle diameter: 16 $\mu$m, specific surface area: 6.9 m$^2$/g, tap density: 1.00 g/cm$^3$). The obtained spheroidized graphite was mixed with tar (ash content: 0.01 mass% or less, metal impurity content: 60 ppm by mass, Qi: 0.1 mass% or less) as an amorphous carbonaceous material precursor and the pressure in the furnace was reduced to 10 torr or less. After restoring the pressure to the atmospheric pressure with nitrogen, the oxygen concentration in the furnace was reduced to 0.01 vol% or less by circulating nitrogen, and a heat treatment at 1300°C was performed in an inert gas. The obtained fired product was subjected to crushing and classification to obtain a carbon material (A-4).

Table 1 shows the evaluation results of the obtained carbon material (A-4).

[Production Example 5] Production of Carbon Material (B-1)

Flake natural graphite having a volume-based average particle diameter of 100 $\mu$m was subjected to a spheroidization treatment to obtain a carbon material (B-1) having a pellet density of 1.96 g/cm$^3$.

Table 2 shows the evaluation results of the obtained carbon material (B-1).

[Production Example 6] Production of Carbon Material (B-2)

Flake natural graphite having a volume-based average particle diameter of 100 $\mu$m was subjected to a spheroidization treatment to obtain a carbon material (B-2) having a pellet density of 1.95 g/cm$^3$.

Table 2 shows the evaluation results of the obtained carbon material (B-2).

[Production Example 7] Production of Carbon Material (B-3)

Flake natural graphite having a volume-based average particle diameter of 100 $\mu$m was subjected to a spheroidization treatment to obtain spheroidized graphite (volume-based average particle diameter: 13 $\mu$m, specific surface area: 7.8 m$^2$/g, tap density: 0.90 g/cm$^3$). The obtained spheroidized graphite was mixed with pitch (ash content: 0.1 mass%, Qi: 0.2 mass% or less) as a graphite material precursor and a rubber container was filled with the mixture. Then the rubber container was sealed, and an isotropic pressurization treatment was performed. Thereafter, a heat treatment was performed at 1000°C in an inert gas and a graphitization treatment was performed at 3000°C in an inert gas. The obtained graphitized product was subjected to crushing and classification to obtain a carbon material (B-3).

[Production Example 8] Production of Carbon Material (B-4)

Flake natural graphite having a volume-based average particle diameter of 100 $\mu$m was subjected to a spheroidization treatment to obtain spheroidized graphite (volume-based average particle diameter: 8 $\mu$m, specific surface area: 11 m$^2$/g, tap density: 1.00 g/cm$^3$). The obtained spheroidized graphite was mixed with pitch (ash content: 0.1 mass%, Qi: 0.2 mass% or less) as a graphite material precursor and a rubber container was filled with the mixture. Then the rubber container was sealed, and an isotropic pressurization treatment was performed. Thereafter, a heat treatment was performed at 1000°C in an inert gas and a graphitization treatment was performed at 3000°C in an inert gas. The obtained graphitized product was subjected to crushing and classification to obtain a carbon material (B-3).

[Example 1]

A carbon material composition was obtained by mixing 70 mass% of the carbon material (A-1) with 30 mass% of the carbon material (B-1).

Table 4 shows the evaluation results of the obtained carbon material composition.

[Examples 2 to 7]

Carbon material compositions were obtained in the same manner as in Example 1, except that the type and the content of the carbon material were changed as shown in Table 3.

Table 4 shows the evaluation results of the obtained carbon material composition.

[Comparative Examples 1 to 5]

Carbon material compositions were obtained in the same manner as in Example 1, except that the type and the content of the carbon material were changed as shown in Table 1.

Table 4 shows the evaluation results of the obtained carbon material composition.

[Table 1]

Table 1

| | Carbon material (A) | | | | | | |
|---|---|---|---|---|---|---|---|
| | Type | Number of peaks in pore size distribution | Local minimum value [nm] between smallest peak and next peak | Pore diameter [nm] at peak top of smallest peak | Coating rate x [%] | Cumulative pore volume y [mL/g] | Right side of formula (1) |
| Production Example 1 | (A-1) | 2 | 432 | 360 | 11 | 0.01 | 0.038 |
| Production Example 2 | (A-2) | 2 | 659 | 270 | 9.5 | 0.02 | 0.050 |
| Production Example 3 | (A-3) | 2 | 659 | 135 | 8 | 0.03 | 0.063 |
| Production Example 4 | (A-4) | 2 | 1419 | 547 | 4 | 0.11 | 0.096 |

[Table 2]

Table 2

| | Carbon material (B) | | | | |
|---|---|---|---|---|---|
| | Type | Pellet density [g/cm$^3$] | Volume-based average particle diameter [μm] | Specific surface area [m$^2$/g] | Tap density [g/cm$^3$] |
| Production Example 5 | (B-1) | 1.96 | 21 | 4.9 | 0.90 |
| Production Example 6 | (B-2) | 1.95 | 17 | 6.2 | 1.00 |
| Production Example 7 | (B-3) | 1.73 | 13 | 4.2 | 1.02 |
| Production Example 8 | (B-4) | 1.65 | 8 | 3.5 | 1.20 |

[Table 3]

Table 3

| | Carbon material (A) | | Carbon material (B) | |
|---|---|---|---|---|
| | Type | Content [mass%] | Type | Content [mass%] |
| Example 1 | (A-1) | 70 | (B-1) | 30 |
| Example 2 | (A-2) | 70 | (B-1) | 30 |
| Example 3 | (A-2) | 60 | (B-1) | 40 |
| Example 4 | (A-3) | 60 | (B-1) | 40 |
| Example 5 | (A-3) | 70 | (B-2) | 30 |
| Example 6 | (A-3) | 60 | (B-2) | 40 |
| Example 7 | (A-3) | 50 | (B-2) | 50 |
| Comparative Example 1 | (A-3) | 100 | - | - |

(continued)

| | Carbon material (A) | | Carbon material (B) | |
| --- | --- | --- | --- | --- |
| | Type | Content [mass%] | Type | Content [mass%] |
| Comparative Example 2 | - | - | (B-2) | 100 |
| Comparative Example 3 | (A-3) | 80 | (B-3) | 20 |
| Comparative Example 4 | (A-3) | 80 | (B-4) | 20 |
| Comparative Example 5 | (A-4) | 100 | - | - |

[Table 4]

Table 4

| | Initial efficiency [%] | Expansion [%] |
| --- | --- | --- |
| Example 1 | 93.3 | 5.2 |
| Example 2 | 93.5 | - |
| Example 3 | 93.7 | - |
| Example 4 | 93.3 | - |
| Example 5 | 93.0 | 5.4 |
| Example 6 | 93.3 | - |
| Example 7 | 93.1 | 5.7 |
| Comparative Example 1 | 91.9 | 5.0 |
| Comparative Example 2 | 93.0 | 6.8 |
| Comparative Example 3 | 92.0 | - |
| Comparative Example 4 | 91.9 | 5.5 |
| Comparative Example 5 | 92.9 | 8.0 |

As seen from Table 4, the secondary batteries including the negative electrodes using the carbon material compositions in Examples 1 to 7 according to the present embodiment can maintain high initial efficiency and reduce the expansion of the electrode plate to a low level as compared with the secondary batteries including the negative electrodes using the carbon material compositions in Comparative Examples 1 to 5. This result is considered to be due to the combination of the dense and low-expansion carbon material (A) and the carbon material (B) having a high pellet density.

Although the present invention has been described in detail with reference to the specific embodiment, it will be apparent to those skilled in the art that various changes and modifications can be made without departing from the spirit and scope of the present invention. The present application is based on a Japanese patent application (No. 2022-048746) filed on March 24, 2022, the contents of which are incorporated herein by reference.

INDUSTRIAL APPLICABILITY

The carbon material composition according to the present invention is not destroyed during pressing even in use at a high density, can maintain high initial efficiency of a secondary battery, and can reduce expansion of an electrode plate to a low level. Therefore, it can be preferably used as an active material for a negative electrode for a secondary battery, more preferably used as an active material for a negative electrode for a non-aqueous secondary battery, and particularly preferably used as an active material for a negative electrode for a lithium-ion secondary battery.

**Claims**

1.  A carbon material composition comprising a carbon material (A) and a carbon material (B),

wherein the carbon material (A) contains graphite containing an amorphous carbonaceous material or a graphite material;
has two or more peaks in a pore size distribution measured by a mercury porosimetry; and
satisfies a following formula (1):

$$y \leq -0.0084x + 0.13 \quad (1)$$

wherein a cumulative pore volume in a range where a pore diameter is equal to or smaller than a pore diameter at a local minimum value in the pore size distribution is defined as y (mL/g), the local minimum value is taken between a peak of a smallest pore diameter and a peak of a second smallest pore diameter in the pore size distribution, and a coating rate of the amorphous carbonaceous material or the graphite material in the graphite is defined as x (%), and
the carbon material (B) has a pellet density of 1.80 $g/cm^3$ or more.

2. The carbon material composition according to claim 1, wherein the carbon material (A) further satisfies a following formula (2):

$$y \geq 0.005 \quad (2).$$

3. The carbon material composition according to claim 1, wherein a pore diameter at a peak top of the peak of the smallest pore diameter is 500 nm or less.

4. The carbon material composition according to claim 1, wherein x in formula (1) is 0.1 to 15.

5. The carbon material composition according to claim 1, wherein the carbon material (A) has a tap density of 1.15 $g/cm^3$ or more.

6. The carbon material composition according to claim 1, wherein the carbon material (A) has a specific surface area of 3.0 $m^2/g$ or less.

7. The carbon material composition according to claim 1, wherein the carbon material (B) is spheroidized graphite.

8. The carbon material composition according to claim 1, wherein the carbon material (B) has a specific surface area of 3.0 $m^2/g$ or more.

9. The carbon material composition according to claim 1, wherein with respect to 100 mass% of the carbon material composition, a content of the carbon material (A) is 40 mass% to 90 mass%, and a content of the carbon material (B) is 10 mass% to 60 mass%.

10. A method for producing a carbon material composition, comprising

a step of mixing a carbon material (A) with a carbon material (B),
wherein the carbon material (A) contains graphite containing an amorphous carbonaceous material or a graphite material;
has two or more peaks in a pore size distribution measured by a mercury porosimetry; and
satisfies a following formula (1):

$$y \leq -0.0084x + 0.13 \quad (1)$$

wherein a cumulative pore volume in a range where a pore diameter is equal to or smaller than a pore diameter at a local minimum value in the pore size distribution is defined as y (mL/g), the local minimum value is taken between a peak of a smallest pore diameter and a peak of a second smallest pore diameter in the pore size distribution, and a coating rate of the amorphous carbonaceous material or the graphite material in the graphite is defined as x (%), and
the carbon material (B) has a pellet density of 1.80 $g/cm^3$ or more.

**11.** A negative electrode comprising

a current collector; and
an active material layer formed on the current collector,
wherein the active material layer contains the carbon material composition according to any one of claims 1 to 9.

**12.** A secondary battery comprising

a positive electrode;
a negative electrode; and
an electrolyte,
wherein the negative electrode is the negative electrode according to claim 11.

## INTERNATIONAL SEARCH REPORT

| International application No. |
| --- |
| **PCT/JP2023/004868** |

| A. CLASSIFICATION OF SUBJECT MATTER |
| --- |
| *H01M 4/587*(2010.01)i; *C01B 32/05*(2017.01)i; *C01B 32/21*(2017.01)i; *H01M 4/36*(2006.01)i<br>FI: H01M4/587; H01M4/36 D; C01B32/05; C01B32/21 |
| According to International Patent Classification (IPC) or to both national classification and IPC |

| B. FIELDS SEARCHED |
| --- |
| Minimum documentation searched (classification system followed by classification symbols)<br>H01M4/587; C01B32/05; C01B32/21; H01M4/36 |
| Documentation searched other than minimum documentation to the extent that such documents are included in the fields searched<br>Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2021-158043 A (MITSUBISHI CHEM CORP) 07 October 2021 (2021-10-07) | 1-12 |
| A | JP 2015-185443 A (MITSUBISHI CHEM CORP) 22 October 2015 (2015-10-22) | 1-12 |
| A | JP 2014-67643 A (MITSUBISHI CHEM CORP) 17 April 2014 (2014-04-17) | 1-12 |
| A | JP 2010-251315 A (MITSUBISHI CHEM CORP) 04 November 2010 (2010-11-04) | 1-12 |
| A | JP 2016-85906 A (JFE CHEMICAL CORP) 19 May 2016 (2016-05-19) | 1-12 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 April 2023** | **18 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/004868**

| Patent document cited in search report | | | Publication date (day/month/year) | Patent family member(s) | | | Publication date (day/month/year) |
|---|---|---|---|---|---|---|---|
| JP | 2021-158043 | A | 07 October 2021 | (Family: none) | | | |
| JP | 2015-185443 | A | 22 October 2015 | (Family: none) | | | |
| JP | 2014-67643 | A | 17 April 2014 | (Family: none) | | | |
| JP | 2010-251315 | A | 04 November 2010 | US | 2012/0052393 | A1 | |
| | | | | EP | 2413403 | A1 | |
| | | | | CN | 102362381 | A | |
| | | | | KR | 10-2012-0022731 | A | |
| JP | 2016-85906 | A | 19 May 2016 | KR | 10-2017-0057427 | A | |
| | | | | CN | 107078288 | A | |

Form PCT/ISA/210 (patent family annex) (January 2015)

**EP 4 310 956 A1**

**Patent documents cited in the description**

- JP 2021158043 A
- JP 2022048746 A